# EUROPEAN PATENT APPLICATION

(11) **EP 1 498 398 A2**
(43) Date of publication of application: **19.01.2005**
(21) Application number: 04254086.4
(22) Date of filing: 08.07.2004
(51) Int. Cl.: C03C 25/64, C03C 25/60, B01D 53/00

(54) **Method for blending and recirculating deuterium-containing gas**

(30) Priority: 17.07.2003 US 488001 P; 27.04.2004 US 833180
(71) Applicant: THE BOC GROUP, INC., Murray Hill, New Providence, New Jersey 07974 (US)
(72) Inventor: Shirley, Arthur Irving, Hillsborough, NJ 08844-2241 (US); Hwang, Shuen-Cheng, Chester, NJ 07930 (US)
(74) Representative: Wickham, Michael

(57) **Abstract**

A method for blending a deuterium-containing gas mixture used for optical fiber manufacturing and for recovering, purifying and recirculating the mixture. Includes treating the optical fiber by soaking it in the deuterium-containing gas mixture in a process chamber (50). The spent or unused deuterium-containing gas is recovered (60) from the chamber and is purified (70). This purified deuterium-containing gas is passed to a first storage vessel (80). Gas is taken from the first storage vessel and is mixed with fresh deuterium gas (10) and analyzed for purity (30). If the purity is of sufficient quality, the blend of deuterium gases is preferably directed to a second (40) storage vessel and onwards to the process chamber (50) containing the optical fiber. If the purity is not satisfactory the gas mixture is returned to the first storage vessel (80).

## Description

### BACKGROUND OF THE INVENTION

The present invention relates to method for the blending, recovering, purifying and recirculating of deuterium-containing mixtures used for optical fiber manufacturing and to a method of producing optical fiber.

Glass optical fibers are customarily made from preforms that are fabricated using the chemical vapor deposition (CVD) of a silica precursor. The CVD process often employs an oxy-hydrogen flame as a heat source to promote the reaction of the precursor with oxygen. This is done either as a direct oxidation (where the flame is separated from the CVD reaction zone) or as a hydrolysis reaction (where the precursor and oxygen react inside the oxy-hydrogen flame). In either case water vapor may be present in the deposited silica, a result of the presence of moisture in the raw materials or the action of the oxy-hydrogen flame. This small amount of moisture is known to localize in the deposited silica at certain defect sites in the glassy matrix to a degree sufficient to cause small but measurable increases in fiber attenuation. This increase in attenuation will cause a loss of some of the transmission spectrum of the cable. Even if various drying steps in the production of the fiber remove the moisture, hydrogen in the environment surrounding the fiber will diffuse over time into the core of the fiber to create additional light attenuating centers.

One means to combat this increase in attenuation due to the presence of hydrogen in the fiber is the use of deuterium, an isotope of hydrogen containing an electron, a proton and a neutron. Like hydrogen, the deuterium will localize in the deposited silica at defect sites in the glassy matrix. Although this will again cause an increase in attenuation, the resonant peaks and their tails lie outside of the bands of the spectrum currently used for transmission. The presence of deuterium will prevent further uptake of hydrogen by the fiber, effectively making it "water-free" over its useful life.

Optical fiber can be treated or "soaked" with deuterium at two stages in fiber production: after the preform is deposited, and after the fiber is drawn. A typical treatment consists of exposing the preform or fiber to a quiescent mix of deuterium in an inert gas, usually 1-10% deuterium in nitrogen. The concentration of deuterium is important to the diffusional processes that allow the glass to take up deuterium, but very little of the deuterium in the mixture is incorporated in the glass. The balance of the gas used for treatment is vented and disposed of, representing a great cost in deuterium and an additional expense in fiber production.

As such, there is a need for improved processes for blending deuterium-containing gas mixtures as well as recovering, purifying and recycling them.

### SUMMARY OF THE INVENTION

The present invention provides a method of blending deuterium-containing mixtures used for optical fiber manufacturing and recovering, purifying and recirculating these deuterium-containing gas mixtures. This method has the features set out in claim 8.

The present invention further provides a method of producing optical fiber wherein the optical fiber is treated by soaking the optical fiber with a deuterium-containing gas mixture. This method has the features set out in claim 1. If the purity is of sufficient quality, the blend of deuterium gases is preferably directed to a second storage vessel and onwards to the process chamber containing the optical fiber.

As used herein, "deuterium-containing" means that the concentration of the deuterium in the gas mixture is from about 1 to about 100 percent by volume of deuterium.

### BRIEF DESCRIPTION OF THE DRAWINGS

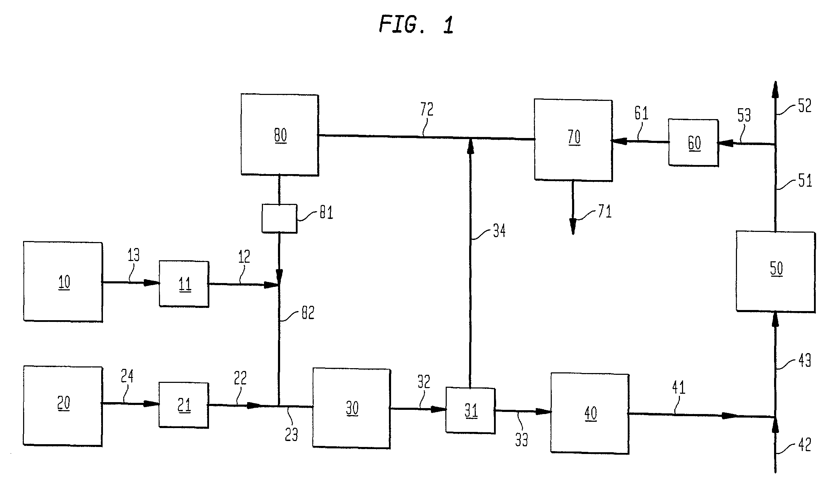

The Figure is a schematic representation of a process for blending a deuterium-containing gas mixture.

### DETAILED DESCRIPTION OF THE INVENTION

A process for blending a deuterium-containing gas mixture for use in a fiber optic manufacturing process in accordance with the invention typically comprises the steps:
(a) recovering the deuterium-containing gas mixture from the fiber optic production process chamber;
(b) purifying the deuterium-containing gas mixture;
(c) directing the purified deuterium-containing gas mixture to a storage vessel;
(d) directing the purified deuterium-containing gas mixture from the storage vessel to an analyzer;
(e) blending fresh deuterium gas with the purified deuterium-containing gas mixture; and
(f) analyzing the combination of the deuterium-containing gas mixture and the deuterium gas.

The deuterium-containing gas mixture comprises deuterium and an inert gas. The inert gas is selected from the group consisting of argon, neon, krypton, xenon, helium or nitrogen or mixtures thereof, and is preferably nitrogen.

The analysis comprises the analysis of the combination of deuterium-containing gas mixture and the deuterium gas for purity of the combination. When there are no impurities in the combination, the combination is preferably directed to a second storage vessel for entry later into the process chamber wherein the optical fiber resides.

Where there are one or more impurities are present in the gas mixture taken from the process chamber, the combination is directed to the purification unit. The purification unit preferably utilises a cold nitrogen gas stream to freeze impurities out of the gas mixture taken from the process chamber but may alternatively be an adsorptive, distillative, absorptive or membrane means of separation. The purified gas mixture is directed to the first storage vessel for later blending and introduction into the fiber optic process chamber.

The deuterium-containing gas mixture preferably contains from about 1 to about 10 percent deuterium, while the remainder is preferably an inert gas.

In the methods according to the present invention, the analyzer analyzes the blended deuterium containing gas mixture to determine the amount of impurities such as hydrocarbons and other by-products of the fiber optic production process. The analyzer is typically a mass spectrometry or thermo-analytical device. If the purity of this blended deuterium gas mixture is under a predetermined set point it can be forwarded to the second storage vessel and utilized for soaking the optic fiber. If the purity reaches the predetermined set point the blended gas mixture can be returned to the first storage vessel and used later.

Advantages of the method according to the invention are that the spent deuterium gas, which would otherwise be vented and wasted, can be purified and blended with fresh deuterium gas; and the deuterium containing gas can be then directed back to the fiber optic production process chamber and utilized for additional, or fresh soaking of the optical fiber.

Reference will now be made to the Figure which is a schematic flow diagram of a plant for performing the method according to the present invention. For the initial startup of the process, the desired deuterium-containing mixture can be formulated by dynamic blending of deuterium from the deuterium storage tank 10 through line 13 to a mass flow control device 11 and through line 12 to line 82 with an inert gas, selected from the group consisting of argon, neon, krypton, xenon, helium, nitrogen and mixtures thereof, from an inert gas storage tank 20 through line 24 to a mass flow control device 21 and through line 22 to join line 82. Mass flow controllers 11 and 21 or similar flow control devices can be used to adjust the individual gas flows through lines 12 and 22 respectively. The mixture is delivered through line 23 and sent to a deuterium analyzer 30. The analyzer can be an off-line or in-situ detector, and as depicted in the Figure is in-situ. If the mixture is off specification, it will be diverted to a first mixture storage tank 80 through line 32 via a three-way valve 31 and line 34 to line 72 and onward to first mixture storage tank 80. If the mixture of gas has the correct specification, then it will be forwarded to a second mixture storage tank 40 from line 32 via the three-way valve 31 and line 33 to be used in the manufacturing of optical fibers in process chamber 50.

The first mixture storage tank 40 contains the deuterium gas mixtures that comprise the deuterium-containing gas mixture from the process chamber and fresh deuterium gas, all of sufficient purity to be transported through line 41 to line 43 for entry into the process chamber 50. The process chamber 50 has purge lines 42 and 52. At the end of an operation, the process chamber 50 can be isolated from lines 43 and 51 by closing suitable valves (not shown) and purged with inert gas which passes from line 42 via line 43 into the chamber 50 and from the chamber 50 via line 51 to the line 52 through which it leaves the plant. The inert gas tank 20 can be used as the source of the purge gas. In an alternative embodiment of the present invention, second storage tank 40 is not employed and the deuterium-containing gas mixture from the process chamber and fresh deuterium gas is directed immediately from the analyzer into the process chamber 50.

The deuterium-containing exhaust gas mixture from process chamber 50 which may contain impurities such as hydrocarbons and other compounds is directed through line 51 and line 53 and recovered by a pump 60 and forwarded to a suitable purification unit 70 through line 61 where any compounds other than deuterium and the desired inert gas are removed. Line 52 vents any other undesirable gases from the process cycle. If only impurities that have high freezing points are to be removed, a cold nitrogen gas stream can be used to provide the refrigeration required to freeze the impurities. Impurities are vented from the purification unit 70 through line 71. The purified gas is directed to the storage tank 80 through line 72 where it may also be joined by any off specification deuterium-containing gas mixture. The purified deuterium-containing mixture is stored in storage tank 80 for subsequent use in adjusting the concentration of the deuterium in the gas mixture supplied to the process chamber 50.

If the pressure in the process chamber 50 is less than that in the storage tank 80, a vacuum pump is necessary to recover the spent deuterium-containing mixture. Alternatively, the inert gas from the inert gas storage tank 20 can be used as a purge gas to recover deuterium from the process chamber 50. Once the deuterium-containing mixture is recovered in the storage tank 80, it can be used as a feed gas through line 82 and mass flow controller 81 to be blended with pure deuterium gas from storage tank 10 and with inert gas from storage tank 20, if necessary.

While this invention has been described with respect to particular embodiments thereof, it is apparent that numerous other forms and modifications of the invention will be obvious to those skilled in the art. The appending claims in this invention generally should be construed to cover all such obvious forms and modifications which are within the true scope of the present invention.

## Claims

1. A method of producing optical fiber wherein said optical fiber is treated with deuterium-containing gas mixture comprising the steps:
a) soaking the optical fiber in said deuterium-containing gas mixture in a process chamber;
b) recovering said spent deuterium-containing gas mixture from said process chamber;
c) purifying as necessary said recovered deuterium-containing gas mixture and directing the recovered deuterium-containing gas mixture to a first storage vessel;
d) blending fresh deuterium gas with said recovered deuterium-containing gas mixture and directing said blended deuterium gas to an analyzer;
e) analyzing the purity of the blended deuterium gas and according to the purity directing said blended deuterium gas to said process chamber or to the storage vessel.

2. A method according to claim 1, wherein said deuterium-containing gas mixture contains about 1 to about 10 percent deuterium by volume.

3. A method according to claim 1 or claim 2, wherein said deuterium-containing gas mixture contains an inert gas.

4. A method according to claim 3, wherein said inert gas selected from the group consisting of argon, neon, krypton, xenon, helium, nitrogen, and mixtures thereof.

5. A method according to any one of the preceding claims, wherein said purifying is performed with a cold nitrogen gas stream.

6. A method according to any one of the preceding claims, wherein the purity analysis is conducted with a mass spectroscopy analyzer and a thermal conductivity analyzer.

7. A method according to anyone of the preceding claims, wherein the blended deuterium gas passes to the process chamber via a second storage vessel.

8. A method of recovering and recirculating a deuterium-containing gas mixture from a fiber optic production process chamber comprising withdrawing said deuterium-containing gas mixture from said process chamber; purifying said deuterium-containing gas mixture; blending said purified deuterium with fresh deuterium gas; and adding said blend of said purified deuterium with said fresh deuterium gas to said process chamber.

9. A method according to claim 8 wherein said purifying is performed with a cold nitrogen gas stream.
